# EUROPEAN PATENT SPECIFICATION

(11) **EP 2 535 162 B1**
(45) Date of publication and mention of the grant of the patent: **06.08.2014**
(21) Application number: 12004499.5
(22) Date of filing: 14.06.2012
(51) Int. Cl.: B29C 45/50, B29C 45/17

(54) **Injection moulding device and method of aligning a drive shaft with the injection screw**
Einspritzvorrichtung und Verfahren zur Ausrichtung eines Antriebsschafts bezüglich der Einspritzschnecke.
Dispositif de moulage par injection et procédé d'alignement d'un arbre d'entraînement avec la vis d'injection

(30) Priority: 17.06.2011 JP 2011134679
(43) Date of publication of application: 19.12.2012
(73) Proprietor: Sumitomo Heavy Industries, Ltd., Tokyo 141-6025 (JP)
(72) Inventor: Tatsumi, Yutaka, Inage-ku Chiba-shi Chiba 263-0001 (JP)
(74) Representative: Wimmer, Hubert

(56) References cited:
- EP-A1- 1 790 457
- JP-A- 2009 255 372
- US-B2- 7 841 250

## Description

### BACKGROUND OF THE INVENTION

### 1. Field of the Invention

The present invention relates to an injection device having a screw and a drive unit and a method of adjusting a center thereof.

### 2. Description of the Related Art

Conventionally, an injection molding machine is configured to fill a cavity space of a die unit with resin heated and melted in a heating cylinder at high pressure and to obtain a molded product by cooling and solidifying the resin in the cavity space. This injection molding machine includes a mold clamping device, injection device and the like.

The mold clamping device includes a fixed platen, a movable platen, a toggle mechanism and the like. The movable platen is driven by the toggle mechanism, and by allowing the movable platen to go back and forth relative to the fixed platen, mold closing, mold clamping and mold opening of the die unit are performed.

Moreover, the injection device includes a heating cylinder, a screw, an injection nozzle, a drive unit and the like. The heating cylinder heats and melts the resin provided from a hopper. The screw is provided in the heating cylinder rotatable and movable back and forth. The injection nozzle is provided at a tip of the heating cylinder, and the resin melted in the heating cylinder is injected into the cavity space through the injection nozzle.

A drive shaft of the drive unit is connected to the back end of the screw. The drive shaft of the drive unit rotates and goes back and forth, by which the screw rotates and goes back and forth. Then, the resin is measured by allowing the drive unit to make the screw go backward, and the resin is injected by allowing the drive unit to make the screw go forward.

Here, as discussed above, because the injection device drives the screw by connecting the drive shaft of the drive unit with the end of the screw, a centering adjustment to match the shaft center of the screw and the shaft center of the drive shaft is needed. Conventionally, in matching the shaft center of the screw and that of the drive shaft, the screw is moved relative to the drive unit, by which the centering adjustment to match the shaft center of the screw and that of the drive shaft is performed (see Japanese Patent Application Publication No. 2009-255372, which is called hereinafter "Patent Document 1").

However, there is a concern that the screw may be displaced relative to the heating cylinder by the centering adjustment according to the above discussed conventional technique. In this case, there is a problem of the screw contacting the heating cylinder locally in driving, by which the screw and the heating cylinder become worn at an early stage, and excessive heating of the resin occurs.

Attention is drawn to EP-A-1790457 which describes an injection apparatus in accordance with the preamble of claim 1. It includes an injection part configured to pressurize and thereby inject melted resin. A motion conversion mechanism is configured to convert rotational motion generated by an injection drive unit into linear motion of the injection part. A load transmission mechanism is configured to transmit a load, applied to the injection part as a reaction force of the melted resin, to a strain unit via at least a part of the motion conversion mechanism. The load transmission mechanism includes a thrust bearing configured to receive the load, and an inner circumferential portion of the strain unit is attached to a bearing holder that holds an outer circumferential portion of the thrust bearing.

### SUMMARY OF THE INVENTION

In accordance with the present invention an injection device and a method of adjusting a shaft center of an injection device, as set forth in the independent claims, respectively, are provided. Preferred embodiments of the invention are described in the dependent claims.

Embodiments of the present invention provide a novel and useful injection device and a method of adjusting a center thereof solving one or more of the problems discussed above.

More specifically, the object of the present invention is to provide an injection device and a method of adjusting a center thereof to be able to prevent a local contact between a screw and a heating cylinder.

According to one aspect of the present invention, there is provided an injection device including:
a screw rotatable and movable back and forth provided in a heating cylinder;
a drive unit including a drive shaft to drive the screw; and
a centering adjustment mechanism configured to match a shaft center of the drive shaft to a shaft center of the screw.
According to another aspect of the present invention, there is provided a method of adjusting a center of an injection device,
the injection device including:
   a screw provided in a heating cylinder rotatable and movable back and forth; and
   a drive unit having a drive shaft to drive the screw,
the method including the step of:
   matching a shaft center of the drive shaft to a shaft center of the screw.

Additional objects and advantages of the embodiments are set forth in part in the description which follows, and in part will become obvious from the description, or may be learned by practice of the invention. The object and advantages of the invention will be realized and attained by means of the elements and combinations particularly pointed out in the appended claims. It is to be understood that both the foregoing general description and the following detailed description are exemplary and explanatory and are not restrictive of the invention as claimed.

### BRIEF DESCRIPTION OF THE DRAWINGS

FIG. 1 is a view showing an injection molding machine provided with an injection device of an embodiment of the present invention;
FIG. 2 is a view to illustrate an injection device and a method of adjusting a center thereof of an embodiment of the present invention, showing a state before adjusting; and
FIG. 3 is a view to illustrate an injection device and a method of adjusting a center thereof of an embodiment of the present invention, showing a state after adjusting.

### DETAILED DESCRIPTION OF THE PREFERED EMBODIMENTS

A description is given below, with reference to drawings of embodiments of the present invention.

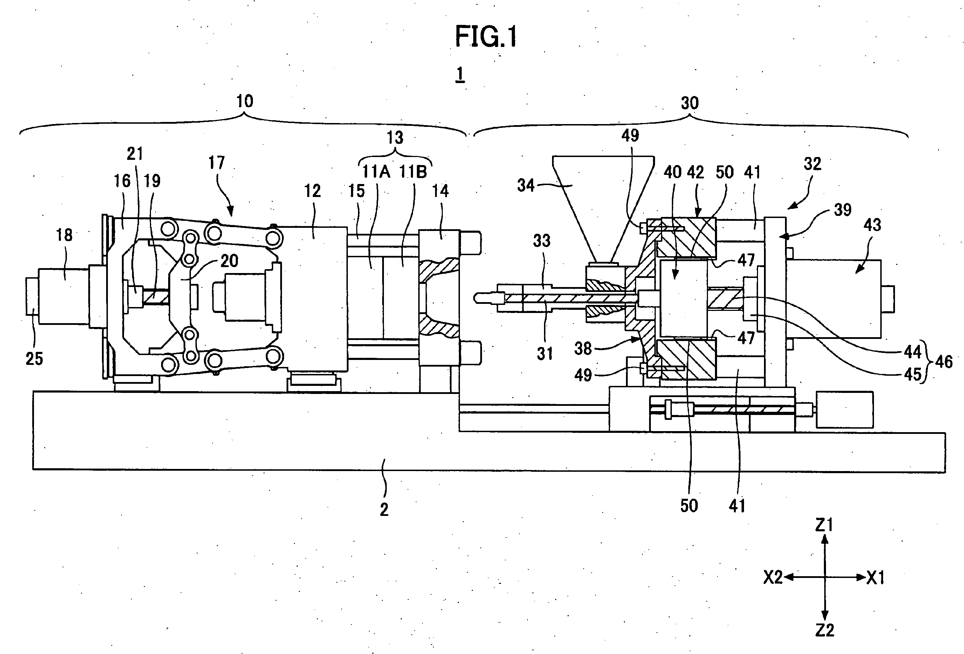

FIG. 1 shows an injection molding machine 1 to which an injection device and a method of adjusting a center thereof of an embodiment of the present invention can be applied. The injection molding machine 1 is roughly made up of a mold clamping device 10 and an injection device 30.

First, a description is given about the mold clamping device 10. The mold clamping device 10 includes a movable platen 12 to which a movable die 11A is attached, and a fixed platen 14 to which a fixed die 11B is attached. The movable die 11A and the fixed die 11B constitute a die unit 13. The movable platen 12 and the fixed platen 14 are coupled to each other by way of divers 15. The movable platen 12 and the fixed platen 14 can slide along the divers 15.

Moreover, the mold clamping device 10 includes a toggle mechanism 17 one end of which is coupled to the movable platen 12 and the other end of which is coupled to a toggle support 16. At the center of the toggle support 16, a ball screw shaft 19 is disposed.

The end on the arrow X2 direction side in the drawing of the ball screw shaft 19 is connected to a drive shaft of a mold clamping motor 18. Furthermore, the other end on the arrow X1 direction side of the ball screw shaft 19 is connected to a crosshead 20 of the toggle mechanism 17.

In the mold clamping device 10 configured as mentioned above, if the mold clamping motor 18 drives, rotation of the mold clamping motor 18 is transferred to a nut 21, and the nut 21 rotates. The rotation of the nut 21 is transformed into a translatory movement of the ball screw shaft 19, and therefore the crosshead 20 moves linearly. The toggle mechanism 17 operates due to this movement of the crosshead 20, and the movable platen 12 moves along the diver 15, by which the mold closing, mold clamping and mold opening to the die 13 are performed.

Here, a position detector 25 is connected to the rear end of the mold clamping motor 18. The position detector 25 detects a position of the crosshead 20 that moves with the rotation of the ball screw shaft 19, or a position of the movable platen 12 coupled to the crosshead 20 by way of the toggle mechanism 17, by detecting a number of rotations or a rotation amount of the mold clamping motor 18.

Next, a description is given about the injection device 30. The injection device 30 includes a screw 31 and a drive unit 32. The screw 31 is provided inside a heating cylinder 33, being configured to be rotatable and movable back and forth (i.e., movable in the X1 and X2 directions). In addition, a hopper 34 is provided at an upper position of the heating cylinder 33.

Moreover, the back end of the heating cylinder 33 is fixed to a front injection support 38. Also, a rear injection support 39 is disposed at a predetermined distance from the front injection support 38. Furthermore, coupling rods 41 are installed between the front injection support 38 and the rear injection support 39, by which the predetermined distance is maintained between the front injection support 38 and the rear injection support 39. In addition, the front injection support 38, the rear injection support 39 and the coupling rod 41 constitute an injection frame.

Moreover, the back end of the screw 31 (i.e., the end on the X1 direction side) is fixed to a bearing box 40. Inside the bearing box 40, a bearing and the like that rotatably support a ball screw shaft 44 that becomes a drive shaft are provided. This bearing box 40 has a stroke length of the screw 31 in the X1 and X2 directions, and spline lines 50 are formed on the outer peripheral surface.

A plasticizing motor 42 is attached to the front injection support 38 by using fixing bolts 49. As described in detail hereinafter, the plasticizing motor 42 is configured to be able to adjust an attachment position relative to the front injection support 38.

The plasticizing motor 42 is configured to surround the bearing box 40 in a state of being attached to the front injection support 38. Moreover, the plasticizing motor 42 goes into a first drive status of rotating the bearing box 40 in a plasticizing process, and goes into a second drive status of limiting rotation transferred to the bearing box 40 in an injection process.

The plasticizing motor 42 includes a stator attached to the front injection support 38, and a cylindrical rotor provided inside this stator in a radial direction (both of which are not shown in the drawing). Furthermore, a spline nut 47 is installed at the back end of the rotor.

Female splines are formed on the inner peripheral surface of the spline nut 47, and the female splines are engaged with male splines of the spline lines 50 by spline engagement. Accordingly, the bearing box 40 is configured to be movable in the axial direction (i.e., X1 and X2 direction) relative to the plasticizing motor 42.

Because of this, in the first drive status of the plasticizing motor 42, a rotative force that the plasticizing motor 42 generates is transferred to the bearing box 40 through the spline engagement. With this, the bearing box 40 is driven to rotate.

On the other hand, in the second drive status of the plasticizing motor 42, the plasticizing motor 42 is stopped (i.e., the rotation is constrained). Due to this, a constraint force generated by the plasticizing motor 42 is transferred to the bearing box 40 through the spline engagement, and therefore the rotation of the bearing box 40 is also constrained.

A ball screw 46 is disposed between the bearing box 40 and an injection motor 43. The ball screw 46 is made up of a ball screw shaft 44 and a ball nut 45 that are screwed together.

The front end of the ball screw shaft 44 (i.e., the end in the X2 direction) is supported by the bearing box 40 as discussed above, being configured to be rotatable, and immovable in the axial direction. Also, the back end of the ball screw shaft 44 (i.e., the end on the X1 direction side) is connected to the injection motor 43 through a coupler (which is not shown in the drawing).

Next, a description is given about operation of the injection device 30 configured as mentioned above.

To begin with, if the plasticizing motor 42 is driven in an injection process (i.e., if entering the first status), rotation of the plasticizing motor 42 is transferred to the screw 31 through the spline nut 47 and the bearing box 40. This causes the screw 31 to rotate in a forward direction. As a result, the resin that has fallen from the heating hopper 34 is moved forward in the heating cylinder 33 by the screw 31 because the resin held in a thread groove of the screw 31 is conveyed forward. Moreover, as the resin moves forward in the heating cylinder 33, the screw 31 goes backward in the heating cylinder 33. This leads the resin to be accumulated in a front portion of the screw head of the screw 31.

Furthermore, if the injection motor 43 is driven in an injection process, the rotation of the injection motor 43 is transferred to the ball screw shaft 44. The rotation of the ball screw shaft 44 is transformed from the rotary movement into a rotary and translatory movement. As a result, the ball screw shaft 44 goes forward, rotating.

At this time, the plasticizing motor 42 is in the second drive status, the rotation is stopped and a constraint force is generated. Then, the constraint force is transferred to the bearing box 40 through the spline nut 47 and the spline lines 50. This makes the screw 31 connected to the bearing box 40 go forward (i.e., move in the X2 direction) in a state without revolving.

In this manner, if the screw 31 advances, the resin accumulated in the forward portion of the screw head is injected from the injection nozzle at a predetermined injection pressure, and the cavity space of the die 13 is filled with the resin.

In the meantime, to allow the screw 31 to conduct the rotary and forward/backward movement smoothly in the heating cylinder 33 without causing a contact sound and galling, it is necessary for a shaft center of the screw 31 and that of the ball screw shaft 44 to match each other. To achieve this, a centering adjustment is performed in which the shaft center of the ball screw shaft 44 that becomes a drive shaft of the drive unit 32 (which is called hereinafter "a drive shaft center") is matched with the shaft center of the screw 31 (which is called hereinafter "a screw shaft center").

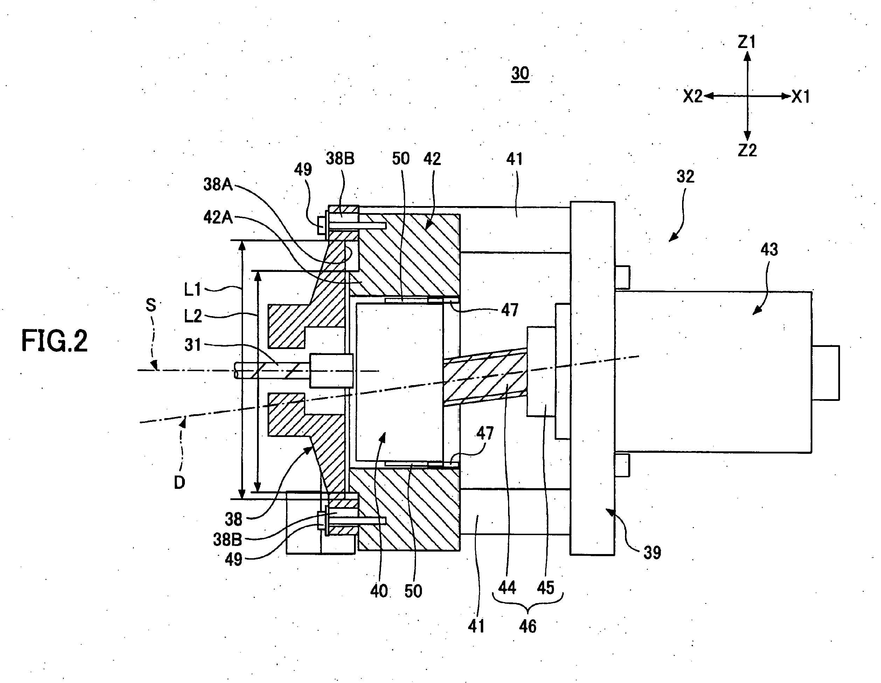

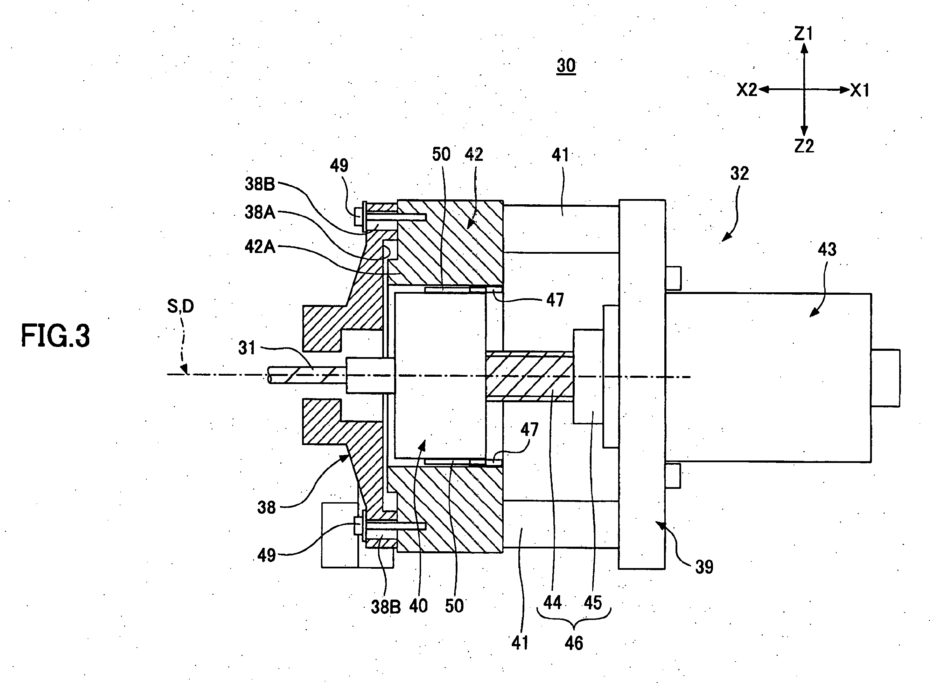

Hereinafter, with reference to FIGS. 2 and 3, a description is given about a centering adjustment in the injection device 30 of the present embodiment.

FIGS. 2 and 3 are enlarged main part configuration views showing a connection site where the screw 31 of the injection device 30 is connected to the drive unit 32. FIG. 2 shows the injection device 30 before the centering adjustment where a screw shaft center S (which is an alternate long and short dashed line shown by an arrow S in the drawing) and a drive shaft center D of the drive unit 32 are out of alignment. In contrast, FIG. 3 shows the injection device 30 after the centering adjustment. Here, respective drawings show a part in cross-section for convenience of illustration.

In an example shown in FIG. 2, the drive shaft center D is inclined obliquely downward relative to the screw shaft center S. Here, the slope angle of the drive shaft D is exaggerated in FIG. 2 for easy understanding, but an actual shift amount between the screw shaft center S and the drive shaft center D is not as large as shown in FIG. 2.

In a conventional centering adjustment method, as discussed above, the screw and the heating cylinder locally contact each other while driving, which causes problems of the screw and the heating cylinder being worn away at an early stage, and excessive heating of the resin being generated.

In the injection device 30 of the present embodiment, a centering adjustment mechanism to match the drive shaft center D of the ball screw shaft 44 to the screw shaft center S of the screw 31 is provided. The centering adjustment mechanism includes an adjustment concave portion 38A formed on the front injection support 38 and an adjustment convex portion 42A formed on the plasticizing motor 42.

The adjustment concave portion 38A is formed on a surface on the side opposite to the plasticizing motor 42 (i.e., a surface on the X1 direction side in a normal direction) of the front injection support 38. The adjustment concave portion 38A of the present embodiment is a depression formed into a circle when seen in the X2 arrow direction. This adjustment concave portion 38A has a diameter shown by an arrowed line L1 in the drawing. However, a shape of the adjustment concave portion 38A is not limited to the circular shape, but other shapes are possible as long as the adjustment convex portion 42A is movable in the adjustment concave portion 38A, as described hereinafter.

The adjustment convex portion 42A is formed on a surface on the side opposite to the front injection support 38 (i.e., a surface on the X2 direction side in a normal direction) of the plasticizing motor 42. The adjustment convex portion 42A of the present embodiment is a projection formed into a circle when seen in the X1 arrow direction. This adjustment convex portion 42A has a diameter shown by an arrowed line L2 in the drawing. However, a shape of the adjustment convex portion 42A is not limited to the circular shape, but other shapes are possible as long as the adjustment convex portion 42A is movable inside the adjustment concave portion 38A.

The diameter L1 of the adjustment concave portion 38A is set larger than the diameter L2 of the adjustment convex portion 42A (L2<L1). Moreover, the dent amount (i.e., the distance in the X1 and X2 directions) of the adjustment concave portion 38A is set to be equal to or a little longer than the projection amount (i.e., the distance in the X1 and X2 directions) of the convex portion 42A. Furthermore, a diameter of bolt holes 38B into which corresponding fixing bolts 49 of the front injection support 38 are inserted is large compared to a bolt diameter of the fixing bolts 49, and therefore configured to have an allowance. Here, in the present embodiment, the allowance of the bolt hole 38B is provided in the front injection support 38, but providing the allowance in the plasticizing motor 42 side is also possible.

Accordingly, the adjustment convex portion 42A is configured to be relatively movable in the adjustment concave portion 38A. In other words, the plasticizing motor 42 including the plasticizing convex portion 42A is configured to be able to adjust an attachment position to the front injection support 38 including the adjustment concave portion 38A.

Therefore, by moving the plasticizing motor 42 relative to the front injection support 38, adjusting the inclination and position of the drive shaft center D is possible. In the present embodiment, by moving the plasticizing motor 42 in a Z1 arrow direction in the drawing relative to the front injection support 38 from the state before the centering adjustment shown in FIG. 2, the drive shaft center D is matched to the screw shaft center S.

FIG. 3 shows the injection device 30 after the centering adjustment where the screw shaft center S and the drive shaft center D match each other. In this state, the front injection support 38 and the plasticizing motor 42 are fixed to each other by using the fixing bolts 49. On this occasion, the size of the bolt hole 38B formed in the front injection support 38 to let the fixing bolt 49 be inserted is set to be larger than the diameter of the fixing bolt 49, corresponding to a moving range of the plasticizing motor 42 relative to the front injection support 38.

As mentioned above, in the present embodiment, because the drive shaft center D of the ball screw shaft 44 is matched to the screw shaft center S of the screw 31, the positional relationship between the screw 31 and the heating cylinder 33 is constant, and the screw 31 is not displaced relative to the heating cylinder 33. Consequently, preventing the screw 31 and the heating cylinder 33 from locally contacting each other is possible, which makes it possible to inhibit early wear of the screw 31 and the heating cylinder 33, and occurrence of excessive heating of the resin.

The present embodiment has illustrated the method where the end on the side close to the screw 31 (i.e., the end in the X2 direction) of the ball screw shaft 44, which is the drive shaft, is moved by moving the plasticizing motor 42, by which the drive shaft center D is adjusted to the screw shaft center S. However, the centering adjustment mechanism and the centering adjusting method are not limited to the embodiment, and the centering adjustment may be performed by moving the opposite end on the side farther to the screw 31 (i.e., the end in the X1 direction).

In this case, it is thought that a centering adjustment mechanism similar to the above discussed one is provided at an attachment position between the ball nut 45 and the rear injection support 39. More specifically, by providing an adjustment concave portion and bolt holes with an allowance in the rear injection support 39 and an adjustment convex portion in the ball nut 45, and by constructing the injection device 30 so that the adjustment convex portion is movable in the concave portion, adjusting the drive shaft center D to the screw shaft center S is possible.

In addition, by providing one centering adjustment mechanism between the front injection support 38 and the plasticizing motor 32, and another centering adjustment mechanism between the rear injection support 39 and the ball nut 45, the injection device 30 may be configured to be able to adjust the position and angle of the drive shaft center D at both ends of the ball screw shaft 44. Moreover, the bolt holes having an allowance may be provided in either the ball nut 45 or the rear injection support 39.

Thus, according to an injection device and a method of adjusting a center thereof of the present embodiment, because a centering adjustment can be performed without moving a screw, contacting the screw with another component such as a heating cylinder can be prevented, and generation of a contact sound and galling can be prevented.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that the various changes, substitutions, and alterations could be made hereto without departing from the spirit and scope of the invention.

For example, in the present embodiment, an example is shown where the present invention is applied to the injection device 30 configured to dispose the plasticizing motor 42 and the injection motor 43 concentrically. However, application of the present invention is not limited to this type of injection device. The present invention can be applied to an injection device configured to include a plasticizing motor and an injection motor that are not coaxial so that the respective motors are connected with a ball screw by using a belt and the like in order to drive the ball screw.

## Claims

1. An injection device (30) comprising:
a screw (31) rotatable and movable back and forth provided in a heating cylinder(33);
a drive unit (32) including a drive shaft (44) to drive the screw; and
a centering adjustment mechanism configured to match a shaft center (D) of the drive shaft to a shaft center (S) of the screw, **characterized in that**
the centering adjustment mechanism is configured to be able to adjust a position and an angle of the shaft center (D) of the drive shaft relative to the shaft center (S) of the screw.

2. The injection device according to claim 1,
wherein the drive unit includes a plasticizing motor (42) to rotate the screw, an injection motor (43) to move the screw back and forth, and an injection frame (38, 39, 41) to support the plasticizing motor and the injection motor, and
the centering adjustment mechanism is configured to be able to adjust an attachment position of at least one of one end close to the screw of the drive shaft and the other end opposite to the one end relative to the injection frame.

3. A method of adjusting a shaft center of an injection device (30), the injection device including:
a screw (31) rotatable and movable back and forth provided in a heating cylinder (33); and
a drive unit (32) including a drive shaft (44) to drive the screw,
the method comprising the step of:
matching a shaft center (D) of the drive shaft to a shaft center (S) of the screw, **characterized in that** the matching further is able to adjust a position and an angle of the shaft center (D) of the drive shaft relative to the shaft center (S) of the screw.

## Patentansprüche

1. Einspritzvorrichtung (30), die Folgendes aufweist:
eine Schnecke (31), die in drehbarer und vorwärts und rückwärts bewegbarer Weise in einem Erwärmungszylinder (33) vorgesehen ist;
eine Antriebseinheit (32), die eine Antriebswelle (44) zum Antreiben der Schnecke aufweist; und
einen Zentriereinstellmechanismus, der so konfiguriert ist, dass er eine Wellenmitte (D) der Antriebswelle an eine Wellenmitte (S) der Schnecke anpasst,
**dadurch gekennzeichnet, dass**
der Zentriereinstellmechanismus so konfiguriert ist, dass er imstande ist, eine Position und einen Winkel der Wellenmitte (D) der Antriebswelle relativ zu der Wellenmitte (S) der Schnecke anzupassen.

2. Einspritzvorrichtung gemäß Anspruch 1,
wobei die Antriebseinheit einen Plastifizierungsmotor (42) zum Drehen der Schnecke, einen Einspritzmotor (43) zum Bewegen der Schnecke vor und zurück, und einen Einspritzrahmen (38, 39, 41) zum Tragen des Plastifizierungsmotors und des Einspritzmotors aufweist, und
der Zentriereinstellmechanismus so konfiguriert ist, dass er imstande ist, eine Anbringungsposition von zumindest einem Ende dicht an der Schnecke der Antriebswelle und dem anderen Ende gegenüberliegend dem einen Ende relativ zu dem Einspritzrahmen anzupassen.

3. Verfahren zum Anpassen einer Wellenmitte einer Einspritzvorrichtung (30), wobei die Einspritzvorrichtung Folgendes aufweist:
eine Schnecke (31), die in drehbarer und vorwärts und rückwärts bewegbarer Weise in einem Erwärmungszylinder (33) vorgesehen ist; und
eine Antriebseinheit (32), die eine Antriebswelle (44) zum Antreiben der Schnecke aufweist,
wobei das Verfahren den folgenden Schritte aufweist:
Anpassen einer Wellenmitte (D) der Antriebswelle an eine Wellenmitte (S) der Schnecke, **dadurch gekennzeichnet, dass** die Anpassung ferner imstande ist, eine Position und einen Winkel der Wellenmitte (D) der Antriebswelle relativ zu der Wellenmitte (S) der Schnecke anzupassen.

## Revendications

1. Dispositif d'injection (30) comprenant :
une vis (31) pouvant tourner et mobile d'arrière en avant, prévue dans un cylindre de chauffe (33) ;
un module de commande (32) incluant un arbre d'entrainement (44) pour entrainer la vis ; et
un mécanisme d'ajustement de centrage agencé pour faire concorder un centre d'arbre (D) de l'arbre d'entrainement avec un centre d'arbre (S) de la vis,
**caractérisé en ce que** le mécanisme d'ajustement de centrage est agencé pour permettre de régler une position et un angle du centre d'arbre (D) de l'arbre d'entrainement par rapport au centre d'arbre (S) de la vis.

2. Dispositif d'injection selon la revendication 1,
dans lequel le module d'entrainement inclut un moteur de plastification (42) pour faire tourner la vis, un moteur d'injection (43) pour entrainer la vis d'avant en arrière et un châssis d'injection (38, 39, 41) pour porter le moteur de plastification et le moteur d'injection, et
le mécanisme d'ajustement de centrage est agencé pour permettre de régler une position de fixation d'au moins l'une de l'extrémité proche de la vis d'entrainement et de l'autre extrémité opposée à la première extrémité par rapport au châssis d'injection.

3. Procédé de réglage d'un centre d'arbre d'un dispositif d'injection (30), le dispositif d'injection comprenant :
une vis (31) pouvant tourner et mobile d'arrière en avant, prévue dans un cylindre de chauffe (33) ;
un module de commande (32) incluant un arbre d'entrainement (44) pour entrainer la vis ; et
le procédé comprenant l'étape suivante :
faire concorder un centre d'arbre (D) de l'arbre d'entrainement avec un centre d'arbre (S) de la vis,
**caractérisé en ce que** la concordance permet en outre de régler la position et l'angle du centre d'arbre (D) de l'arbre d'entrainement par rapport au centre d'arbre (S) de la vis.
